# EUROPÄISCHE PATENTSCHRIFT

(11) **EP 3 362 694 B1**
(45) Veröffentlichungstag und Bekanntmachung des Hinweises auf die Patenterteilung: **08.09.2021**
(21) Anmeldenummer: 16775643.6
(22) Anmeldetag: 28.09.2016
(51) Int. Cl.: F16B 5/08

(54) **VERFAHREN ZUM VERBINDEN VON BAUTEILEN UND BAUTEILVERBUND**
METHOD FOR JOINING COMPONENTS AND COMPONENT COMPOSITE
PROCÉDÉ POUR ASSEMBLER DES PIÈCES ET ASSEMBLAGE DE PIÈCES

(30) Priorität: 13.10.2015 DE 102015219782
(43) Veröffentlichungstag der Anmeldung: 22.08.2018
(73) Patentinhaber: Bayerische Motoren Werke Aktiengesellschaft, 80809 München (DE)
(72) Erfinder: GLÜCK, Bernhard, 82256 Fürstenfeldbruck (DE); KIRSCHNER, Robert, 82140 Olching (DE); SCHMID, Ulrich, 81927 München (DE)
(86) Internationale Anmeldenummer: PCT/EP2016/073115
(87) Internationale Veröffentlichungsnummer: WO 2017/063885

(56) Entgegenhaltungen:
- CN-A- 103 925 267
- JP-A- 2013 022 622

## Beschreibung

Die vorliegende Erfindung betrifft ein Verfahren zum Verbinden eines ersten Bauteils mit einem zweiten Bauteil mittels eines Fügeteils sowie einen Bauteilverbund, der mittels eines erfindungsgemäßen Verfahrens erzeugt wurde.

Zum Verbinden von zwei Bauteilen sind eine Vielzahl unterschiedlicher Fügeverfahren, wie z.B. Schrauben, Nieten, Kleben, Löten, Schweißen oder Klemmen bekannt. In der Karosserieherstellung werden Karosseriebauteile verwendet, die unterschiedliche Werkstoffe aufweisen können, wie beispielsweise Stahl, Aluminium oder faserverstärkte Kunststoffe, wie beispielsweise kohlenstofffaserverstärkter Kunststoff (CFK), aramidfaserverstärkter Kunststoff (AFK) oder glasfaserverstärkter Kunststoff (GFK). Diese Karosseriebauteile werden beispielsweise mittels Blindniettechnik, Stanzniettechnik, Klebetechnik oder sonstiger Fügeteiltechnik miteinander verbunden. Derartige Verfahren haben den Nachteil, dass die erzeugten Fügestellen oftmals eine relativ schlechte Belastbarkeit sowie eine schlechte Fügestellendämpfung aufweisen, wobei sich eine schlechte Fügestellendämpfung negativ auf Schwingungseigenschaften der Karosserie auswirken kann. Aus der CN 103 925 267 A und JP 2013 022622 A sind verschiedene Verfahren zum Verbinden zweier Bauteile bekannt.

Ein direktes Verschweißen von zwei Karosseriebauteilen, die aus unterschiedlichen Werkstoffen, wie z.B. Stahl und Aluminium, bestehen, ist oftmals nicht oder nur unter besonderen Voraussetzungen bzw. eingeschränkt möglich. Zum Verschweißen solcher Bauteile sind Verfahren bekannt, bei denen ein Funktionselement, das ein Material aufweist, welches mit einem zweiten Bauteil verschweißbar ist, an einem ersten Bauteile fixiert wird. Beispielsweise ist das Funktionselement als Bolzen ausgebildet, der in eine Ausnehmung des ersten Bauteils eingepresst wird. Anschließend werden das erste Bauteil und das zweite Bauteil zusammengeführt und das Funktionselement mit dem zweiten Bauteil verschweißt. Auf diese Weise wird eine Verbindung zwischen dem ersten Bauteil und dem zweiten Bauteil geschaffen. Derartige Verbindungen haben den Nachteil, dass die Verbindung des Funktionselements mit dem ersten Bauteil eine relativ schlechte Belastbarkeit sowie eine schlechte Fügestellendämpfung aufweist. Ferner ist das Einbringen von Funktionselementen mittels Pressen sehr aufwendig und kostenintensiv. Des Weiteren weisen derartige Lösungen oftmals eine übermäßige Gewichtszunahme des Bauteilverbunds auf.

Es ist daher Aufgabe der vorliegenden Erfindung, die voranstehend beschriebenen Nachteile bei einem Verfahren zum Verbinden von zwei Bauteilen sowie einem Bauteilverbund zu beheben oder zumindest teilweise zu beheben. Insbesondere ist es Aufgabe der vorliegenden Erfindung ein Verfahren zum Verbinden eines ersten Bauteils mit einem zweiten Bauteil zu schaffen, das auf eine einfache und kostengünstige Art und Weise eine gewichtsreduzierte sowie höher belastbare Verbindung von zwei Bauteilen als aus dem identifizierten Stand der Technik bekannt ermöglicht.

Voranstehende Aufgabe wird gelöst durch ein Verfahren zum Verbinden eines ersten Bauteils mit einem zweiten Bauteil mit den Merkmalen des Anspruchs 1 sowie durch einen Bauteilverbund mit den Merkmalen gemäß Anspruch 14. Weitere Merkmale und Details der Erfindung ergeben sich aus den Unteransprüchen, der Beschreibung und den Zeichnungen. Dabei gelten Merkmale und Details, die im Zusammenhang mit dem Verfahren zum Verbinden eines ersten Bauteils mit einem zweiten Bauteil beschrieben sind, selbstverständlich auch im Zusammenhang mit dem erfindungsgemäßen Bauteilverbund und jeweils umgekehrt, so dass bezüglich der Offenbarung zu den einzelnen Erfindungsaspekten stets wechselseitig Bezug genommen wird beziehungsweise werden kann.

Gemäß dem ersten Aspekt der Erfindung wird die Aufgabe gelöst durch ein Verfahren zum Verbinden eines ersten Bauteils mit einem zweiten Bauteil. Das Verfahren weist folgende Schritte auf:
- Bereitstellen eines ersten Bauteils mit einer ersten Fügeteilaufnahme;
- Erzeugen eines Fügeteils an und/oder in der ersten Fügeteilaufnahme mittels eines generativen Verfahrens;
- Bereitstellen eines zweiten Bauteils mit einer zweiten Fügeteilaufnahme; und
- Verbinden des Fügeteils mit der zweiten Fügeteilaufnahme des zweiten Bauteils, wobei das Verbinden des Fügeteils mit der zweiten Fügeteilaufnahme durch Erzeugen eines zusätzlichen Teilbereichs des Fügeteils, nämlich eines Zusatzbereichs, in der zweiten Fügeteilaufnahme mittels des generativen Verfahrens erfolgt.

Das erste Bauteil weist eine Fügeteilaufnahme auf. Das zweite Bauteil weist eine zweite Fügeteilaufnahme auf, die beispielsweise der ersten Fügeteilaufnahme entspricht oder zur ersten Fügeteilaufnahme auch unterschiedlich ausgebildet sein kann. Eine Fügeteilaufnahme ist ein Bereich eines Bauteils, der zur Aufnahme eines Fügeteils ausgebildet ist. Demnach kann eine Fügeteilaufnahme nahezu jede geometrische Form, wie beispielsweise eine glatte bzw. im Wesentlichen glatte Oberfläche und/oder mindestens einen Absatz bzw. eine Stufe und/oder mindestens eine Ausnehmung bzw. Erhebung, aufweisen.

Ein Fügeteil ist im Sinne der Erfindung ein Objekt mit einer geometrischen Form, das zum Verbinden von zwei Bauteilen ausgebildet ist. Somit ist das erste Bauteil über das Fügeteil mit dem zweiten Bauteil verbindbar.

Es ist erfindungsgemäß vorgesehen, dass das Fügeteil mittels eines generativen Verfahrens erzeugt wird. Ein generatives Verfahren ist ein Verfahren bei dem durch Materialauftrag, insbesondere durch schichtweisen Materialauftrag, ein Objekt erzeugt wird. Mittels eines generativen Verfahrens ist eine geometrische Ausbildung des Fügeteils nahezu beliebig gestaltbar, so dass das Fügeteil optimal an das erste Bauteil und/oder das zweite Bauteil anpassbar ist. Ferner sind bei generativen Verfahren eine Vielzahl unterschiedlicher Fügeteile mit unterschiedlichen Fügeteilwerkstoffen herstellbar, so dass ein Fügeteilwerkstoff optimal auf einen ersten Bauteilwerkstoff des ersten Bauteils und/oder einen zweiten Bauteilwerkstoff des zweiten Bauteils abstimmbar ist, um eine möglichst sichere und belastbare Verbindung des ersten Bauteils mit dem zweiten Bauteil über das Fügeteil zu gewährleisten.

Das Fügeteil wird erfindungsgemäß an und/oder in der ersten Fügeteilaufnahme erzeugt. Das ist unter anderem von einer Ausbildung der ersten Fügeteilaufnahme abhängig. So kann vorgesehen sein, dass das Fügeteil in einer Ausnehmung der ersten Fügeteilaufnahme erzeugt wird. Weiter kann vorgesehen sein, dass das Fügeteil derart erzeugt wird, vom ersten Bauteil zumindest in eine Richtung abzustehen. Ferner kann vorgesehen sein, dass das Fügeteil derart erzeugt wird, dass das Fügeteil eine Ausrichthilfe aufweist, die ein relatives Ausrichten des ersten Bauteils mit dem zweiten Bauteil erleichtert. Die Ausrichthilfe kann beispielsweise als Distanzhalter ausgebildet sein, so dass das erste Bauteil und das zweite Bauteil während und nach dem Zusammenfügen einen vorgegebenen Abstand zueinander aufweisen.

Zum Verbinden des Fügeteils mit der zweiten Fügeteilaufnahme ist es erfindungsgemäß vorgesehen, dass das erste Bauteil und das zweite Bauteil mit einer bestimmten relativen Lage zueinander angeordnet werden, die das erste Bauteil und das zweite Bauteil nach dem Verbinden zueinander aufweisen sollen. Diese relative Lage wird im Folgenden als Verbindungslage bezeichnet. Es kann vorgesehen sein, dass das erste Bauteil und das zweite Bauteil bereits vor dem Erzeugen des Fügeteils in die Verbindungslage gebracht und vorzugsweise in der Verbindungslage temporär fixiert werden. Die Ausführbarkeit eines solchen Verfahrens kann dabei von einer Ausbildung der ersten Fügeteilaufnahme und/oder der zweiten Fügeteilaufnahme abhängig sein, insbesondere wenn das Erzeugen des Fügeteils eine Zugänglichkeit der ersten Fügeteilaufnahme und der zweiten Fügeteilaufnahme von außen erfordert. Alternativ kann vorgesehen sein, dass zunächst das Fügeteil am ersten Bauteil erzeugt wird und anschließend das erste Bauteil und das zweite Bauteil in die Verbindungslage gebracht werden. Dies kann erforderlich sein, wenn eine Ausbildung der ersten Fügeteilaufnahme und/oder zweiten Fügeteilaufnahme ein teilweises oder komplettes Erzeugen des Fügeteils in der Verbindungslage nicht ermöglicht. Eine Verbindung des Fügeteils mit der zweiten Fügeteilaufnahme kann beispielsweise stoffschlüssig und/oder formschlüssig und/oder kraftschlüssig ausgebildet werden beziehungsweise sein.

Die Ausführung des erfindungsgemäßen Verfahrens kann beispielsweise auf zwei unterschiedliche Varianten erfolgen. Gemäß einer ersten Variante werden das erste Bauteil und das zweite Bauteil in die Verbindungslage gebracht und das Fügeteil in einem anschließenden generativen Verfahren von der ersten Fügeteilaufnahme bis zur zweiten Fügeteilaufnahme erzeugt und somit das erste Bauteil mit dem zweiten Bauteil in einem Verfahrensschritt verbunden. Gemäß einer zweiten Variante wird ein Grundbereich des Fügeteils zunächst an und/oder in der ersten Fügeteilaufnahme in einem ersten Erzeugungsschritt erzeugt. Erfindungsgemäß wird dieser Grundbereich bereits als Fügeteil bezeichnet. In einem zweiten Verfahrensschritt werden das erste Bauteil und das zweite Bauteil in die Verbindungslage gebracht. In einem zweiten Erzeugungsschritt wird der Zusatzbereich an dem Fügeteil derart erzeugt, dass der Grundbereich und der Zusatzbereich ein gemeinsames Fügeteil bilden, und dass das erste Bauteil und das zweite Bauteil über dieses Fügeteil miteinander verbunden sind. Diese Ausführung des erfindungsgemäßen Verfahrens hat den Vorteil, dass keine weiteren Fügeverfahren, wie z.B. Schweißen, Löten oder Kleben erforderlich sind. Somit sind beispielsweise Durchlaufzeiten, Rüstzeiten, Kosten sowie maschineller Aufwand des Verfahrens mit einfachen Mitteln reduzierbar.

Das erfindungsgemäße Verfahren zum Verbinden eines ersten Bauteils mit einem zweiten Bauteil hat gegenüber herkömmlichen Verfahren den Vorteil, dass eine besonders belastbare sowie gewichtsreduzierte Verbindung zwischen zwei Bauteilen mittels eines Fügeteils mit einfachen Mitteln sowie kostengünstig ermöglicht wird.

Gemäß einer bevorzugten Weiterentwicklung der Erfindung kann bei einem Verfahren vorgesehen sein, dass das Fügeteil beim Verbinden mit der zweiten Fügeteilaufnahme mit der zweiten Fügeteilaufnahme verschweißt und/oder verlötet und/oder verklebt wird. Hierfür weist das Fügeteil vorzugsweise einen Fügeteilwerkstoff auf, der besonders gut mit einem zweiten Bauteilwerkstoff des zweiten Bauteils verschweißbar und/oder verlötbar und/oder verklebbar ist. Dabei ist bevorzugt, wenn der Fügeteilwerkstoff dem zweiten Bauteilwerkstoff entspricht. Dies hat den Vorteil, dass eine Verbindung zwischen dem Fügeteil und dem zweiten Bauteil mit einfachen Mitteln sowie kostengünstig herstellbar ist. Ferner wird somit eine Belastbarkeit einer Verbindung des Fügeteils mit dem zweiten Bauteil verbessert.

Gemäß einer bevorzugten Weiterentwicklung der Erfindung kann bei einem Verfahren vorgesehen sein, dass das Fügeteil mit der ersten Fügeteilaufnahme verschweißt und/oder verlötet und/oder verklebt wird. Dies hat den Vorteil, dass eine Verbindung zwischen dem Fügeteil und dem ersten Bauteil mit einfachen Mitteln sowie kostengünstig herstellbar ist. Ferner wird somit eine Belastbarkeit einer Verbindung des Fügeteils mit dem ersten Bauteil verbessert, so dass auf diese Weise beispielsweise ein Ablösen des Fügeteils vom ersten Bauteil vor dem Verbinden mit dem zweiten Bauteil verhinderbar ist.

Gemäß einer weiteren bevorzugten Weiterentwicklung der Erfindung kann bei einem Verfahren vorgesehen sein, dass das Fügeteil aus einem Fügeteilwerkstoff erzeugt wird, der mindestens einen ersten Werkstoff und einen vom ersten Werkstoff verschiedenen zweiten Werkstoff aufweist, wobei der erste Werkstoff stoffschlüssig mit dem ersten Bauteil und der zweite Werkstoff stoffschlüssig mit dem zweiten Bauteil verbunden wird. Vorzugsweise weist das Fügeteil eine Werkstoffverteilung auf, bei der ein erster Teilbereich des Fügeteils, der am ersten Bauteil angeordnet ist, eine höhere Konzentration des ersten Werkstoffs und ein zweiter Teilbereich des Fügeteils, der zur Anordnung am zweiten Bauteil ausgebildet ist, eine höhere Konzentration des zweiten Werkstoffs aufweisen. Dabei sind der erste Werkstoff besonders gut mit dem ersten Bauteilwerksoff und der zweite Werkstoff besonders gut mit dem zweiten Bauteilwerkstoff verbindbar. Ein derartiges Fügeteil hat den Vorteil, dass eine Belastbarkeit einer Verbindung mit dem ersten Bauteil und dem zweiten Bauteil verbessert werden kann.

Gemäß einer bevorzugten Weiterentwicklung der Erfindung kann bei einem Verfahren vorgesehen sein, dass das Fügeteil mittels eines 3D-Druckverfahrens, Lasersinterverfahrens, Metallspritzverfahrens, selektiven Laserschmelzverfahrens, Lötverfahrens oder Thixoformingverfahrens erzeugt wird. Derartige generative Verfahren haben den Vorteil, dass diese mit einfachen Mitteln technisch realisierbar sind. Ferner lassen sich mit diesen Verfahren eine Vielzahl unterschiedlicher Fügeteilwerkstoffe zu Fügeteilen verarbeiten.

Gemäß einer bevorzugten Weiterentwicklung der Erfindung kann bei einem Verfahren vorgesehen sein, dass während des Erzeugens des Fügeteils eine stoffschlüssige oder kraftschlüssige Verbindung des Fügeteils mit dem ersten Bauteil und/oder zweiten Bauteil ausgebildet wird. Stoffschlüssige Verbindungen haben den Vorteil, dass diese besonders belastbar sind und eine vorteilhafte Fügestellendämpfung aufweisen. Kraftschlüssige Verbindungen haben den Vorteil, dass diese besser demontierbar als stoffschlüssige Verbindungen sind.

Gemäß einer bevorzugten Weiterentwicklung der Erfindung kann bei einem Verfahren vorgesehen sein, dass die erste Fügeteilaufnahme einen ersten Formschlussabschnitt aufweist, wobei das Fügeteil in der ersten Fügeteilaufnahme derart erzeugt wird, dass das Fügeteil über den ersten Formschlussabschnitt formschlüssig an der ersten Fügeteilaufnahme gehalten ist. Ein Formschlussabschnitt ist beispielsweise als Stufe, Absatz oder Fase ausgebildet und kann beispielsweise eine Hinterschneidung aufweisen. Vorzugsweise ist der erste Formschlussabschnitt derart ausgebildet, dass das Fügeteil im Bereich des Formschlussabschnitts nicht vom ersten Bauteil absteht, sondern in der ersten Fügeteilaufnahme versenkt ist bzw. bündig mit dem ersten Bauteil abschließt. Hierbei ist bevorzugt, wenn das Fügeteil jeweils formschlüssig gegen ein Abrutschen vom ersten Bauteil und dem zweiten Bauteil, z.B. über eine umlaufende Fase in der ersten Fügeteilaufnahme und der zweiten Fügeteilaufnahme, gesichert ist. Ein Formschlussabschnitt hat den Vorteil, dass eine relative Bewegung des Fügeteils zum ersten Bauteil formschlüssig begrenzt ist. Somit ist das Fügeteil zumindest nach dem Verbinden mit dem zweiten Bauteil auch gegen ein Lösen vom ersten Bauteil gesichert.

Gemäß einer weiteren bevorzugten Weiterentwicklung der Erfindung kann bei einem Verfahren vorgesehen sein, dass der erste Formschlussabschnitt eine erste Hinterschneidung aufweist, wobei das Fügeteil derart erzeugt wird, dass das Fügeteil an der ersten Hinterschneidung formschlüssig gehalten wird. Vorzugsweise weist das zweite Fügeteil einen zweiten Formschlussabschnitt auf, wobei der zweite Formschlussabschnitt bevorzugt eine zweite Hinterschneidung aufweist. Gemäß einer bevorzugten Variante des Verfahrens wird ein zusätzlicher Teilbereich des Fügeteils derart erzeugt, dass das Fügeteil auch an der zweiten Hinterschneidung formschlüssig gehalten wird. Mittels einer ersten Hinterschneidung und ggf. einer zusätzlichen zweiten Hinterschneidung wird ein Halt des Fügeteils am ersten Bauteil bzw. zweiten Bauteil verbessert.

Gemäß einer bevorzugten Weiterentwicklung der Erfindung kann bei einem Verfahren vorgesehen sein, dass die erste Fügeteilaufnahme eine erste Durchführung aufweist. Das Fügeteil wird dann vorzugsweise zumindest teilweise innerhalb der ersten Durchführung erzeugt. Ein erster Formschlussabschnitt ist vorzugsweise innerhalb der ersten Durchführung angeordnet. Eine Durchführung hat den Vorteil, dass ein Erzeugen des Fügeteils sowie eine formschlüssige Anbindbarkeit des Fügeteils an das erste Bauteil mit einfachen Mitteln sowie kostengünstig realisiert werden können.

Gemäß einer bevorzugten Weiterentwicklung der Erfindung kann bei einem Verfahren vorgesehen sein, dass die erste Durchführung beim Erzeugen des Fügeteils von dem Fügeteil komplett oder zumindest teilweise verschlossen wird. Ein komplettes Verschließen kann erfindungsgemäß ein Verschließen an mindestens einem Bereich über einen gesamten Querschnitt der ersten Durchführung oder ein Ausfüllen der kompletten ersten Durchführung sein. Dies hat den Vorteil, dass über die Durchführung keine direkte Verbindung zweier entgegengesetzter Bauteilseiten des ersten Bauteils geschaffen wird. Ferner ist somit ein Halt des Fügeteils am ersten Bauteil verbesserbar.

Gemäß einer bevorzugten Weiterentwicklung der Erfindung kann bei einem Verfahren vorgesehen sein, dass das erste Bauteil einen ersten Bauteilwerkstoff und das zweite Bauteil einen zweiten Bauteilwerkstoff aufweisen, wobei der erste Bauteilwerkstoff und der zweite Bauteilwerkstoff verschiedene Werkstoffe sind. Vorzugsweise sind der erste Bauteilwerkstoff und der zweite Bauteilwerkstoff derart verschieden, dass ein direktes Zusammenschweißen und/oder Zusammenlöten und/oder Zusammenkleben des ersten Bauteils mit dem zweiten Bauteil nicht oder zumindest nur schwer bzw. eingeschränkt möglich ist. Bevorzugte Bauteilwerkstoffe sind Stahl, Aluminium, CFK, AFK und GFK. Mittels des erfindungsgemäßen Verfahrens lassen sich insbesondere derart verschiedene Bauteile gut miteinander verbinden, wobei eine Belastbarkeit, ein Gewicht und ein Materialaufwand der Verbindung gegenüber dem Stand der Technik verbessert sind.

Gemäß einer bevorzugten Weiterentwicklung der Erfindung kann bei einem Verfahren vorgesehen sein, dass beim Bereitstellen eines zweiten Bauteils die zweite Fügeteilaufnahme an dem Fügeteil derart angeordnet wird, dass das Fügeteil in die zweite Fügeteilaufnahme hineinragt. Dies hat den Vorteil, dass ein Verbinden des Fügeteils mit dem zweiten Bauteil verbessert wird.

Gemäß einer weiteren bevorzugten Weiterentwicklung der Erfindung kann bei einem Verfahren vorgesehen sein, dass beim Erzeugen des Fügeteils ein Teilbereich des Fügeteils als Abstandsbereich erzeugt wird, der zum Ausbilden eines definierten Abstands zwischen dem ersten Bauteil und dem zweiten Bauteil ausgebildet ist. Dies kann beispielsweise erfolgen, indem an einer Stelle der ersten Fügeteilaufnahme, die in der Verbindungslage dem zweiten Bauteil zugewandt ist, ein Abstandsbereich des Fügeteils erzeugt wird. Dieser Abstandsbereich wird vorzugsweise erzeugt bevor das zweite Bauteil in der Verbindungslage gebracht wird. Der Abstandsbereich ist weiter bevorzugt als Abstandhalter und/oder Zentrierhilfe ausgebildet, die ein Anordnen des ersten Bauteils bzw. zweiten Bauteils in der Verbindungslage führt und somit verbessert. Ferner kann somit vermeidbar sein, dass das erste Bauteil und das zweite Bauteil vor dem Verbinden unbeabsichtigt aus der Verbindungslage geraten.

Bei den zu verbindenden Bauteilen handelt es sich vorzugsweise um Karosseriebauteile, insbesondere eines Kraftfahrzeugs.

Gemäß einem zweiten Aspekt der Erfindung wird die Aufgabe erfindungsgemäß gelöst durch einen Bauteilverbund aufweisend mindestens ein erstes Bauteil und mindestens ein zweites Bauteil, wobei das erste Bauteil mittels eines Fügeteils mit dem zweiten Bauteil verbunden ist. Dabei sind das erste Bauteil und das zweite Bauteil mittels eines erfindungsgemäßen Verfahrens gemäß dem ersten Aspekt der Erfindung miteinander verbunden. Bei dem beschriebenen Bauteilverbund ergeben sich sämtliche Vorteile, die bereits zu einer Verfahren zum Verbinden von einem ersten Bauteil und einem zweiten Bauteil gemäß dem ersten Aspekt der Erfindung beschrieben worden sind.

Das erfindungsgemäße Verfahren zum Verbinden eines ersten Bauteils mit einem zweiten Bauteil wird nachfolgend anhand von Zeichnungen näher erläutert. Es zeigen jeweils schematisch:
- Figur 1: in einer Schnittdarstellung einen ersten Bauteilverbund nach dem Stand der Technik;
- Figur 2: in einer Schnittdarstellung einen zweiten Bauteilverbund nach dem Stand der Technik;
- Figur 3a: in einer Schnittdarstellung eine erste Ausführungsform eines ersten Bauteils nach dem ersten erfindungsgemäßen Verfahrensschritt;
- Figur 3b: in einer Schnittdarstellung eine zweite Ausführungsform eines ersten Bauteils nach dem ersten erfindungsgemäßen Verfahrensschritt;
- Figur 3c: in einer Schnittdarstellung eine dritte Ausführungsform eines ersten Bauteils nach dem ersten erfindungsgemäßen Verfahrensschritt;
- Figur 3d: in einer Schnittdarstellung eine vierte Ausführungsform eines ersten Bauteils nach dem ersten erfindungsgemäßen Verfahrensschritt;
- Figur 4a: in einer Schnittdarstellung die zweite Ausführungsform des ersten Bauteils nach einer ersten Variante eines zweiten erfindungsgemäßen Verfahrensschritts;
- Figur 4b: in einer Schnittdarstellung die zweite Ausführungsform des ersten Bauteils nach einer zweiten Variante des zweiten erfindungsgemäßen Verfahrensschritts;
- Figur 5: in einer Schnittdarstellung das erste Bauteil aus Figur 4b nach einem dritten erfindungsgemäßen Verfahrensschritt;
- Figur 6: in einer Schnittdarstellung das erste Bauteil und zweite Bauteil aus Figur 5 nach einem vierten erfindungsgemäßen Verfahrensschritt;
- Figur 7: in einer Schnittdarstellung eine dritte Variante des erfindungsgemäßen Verfahrens vor dem Erzeugen des Fügeteils; und
- Figur 8: in einer Schnittdarstellung die dritte Variante des erfindungsgemäßen Verfahrens nach dem Erzeugen des Fügeteils.

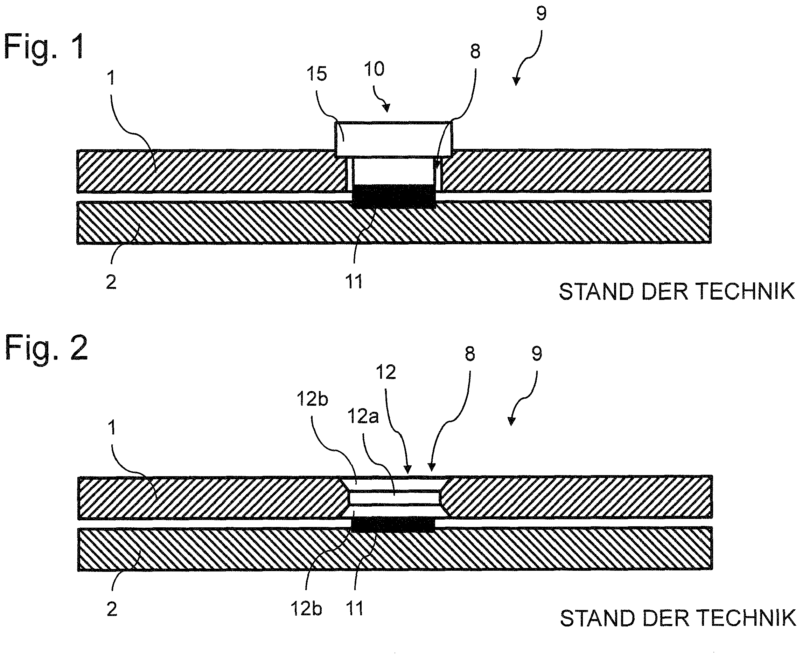

Elemente mit gleicher Funktion und Wirkungsweise sind in den Fig. 1 bis 8 jeweils mit denselben Bezugszeichen versehen.

In Fig. 1 ist ein erster Bauteilverbund 9 nach dem Stand der Technik schematisch dargestellt. Ein erstes Bauteil 1 und zweites Bauteil 2 sind in einer Verbindungslage zueinander angeordnet. In eine erste Durchführung 8 des ersten Bauteils 1 ist ein Bolzen 10 mit einem Bolzenkopf 15 gepresst. Der Bolzenkopf 15 liegt auf einer Oberfläche des ersten Bauteils 1 auf und verhindert somit, dass der Bolzen 10 weiter in die erste Durchführung 8 bewegt werden kann. Eine dem Bolzenkopf 15 abgewandte Seite des Bolzens 10 ist mittels einer Schweißnacht 11 mit dem zweiten Bauteil 2 verbunden.

In Fig. 2 ist ein zweiter Bauteilverbund 9 nach dem Stand der Technik schematisch dargestellt. Ein erstes Bauteil 1 und zweites Bauteil 2 sind in einer Verbindungslage zueinander angeordnet. In eine erste Durchführung 8 des ersten Bauteils 1 ist ein Butzen 12 mit einem zylinderförmigen Mittelteil 12a und zwei sich konisch vom Mittelteil aufweitenden Seitenteilen 12b gepresst. Der Butzen 12 ist somit formschlüssig in der Durchführung 8 des ersten Bauteils 1 gehalten. Ein Seitenteil 12b des Butzensl 2 ist mittels einer Schweißnacht 11 mit dem zweiten Bauteil 2 verbunden.

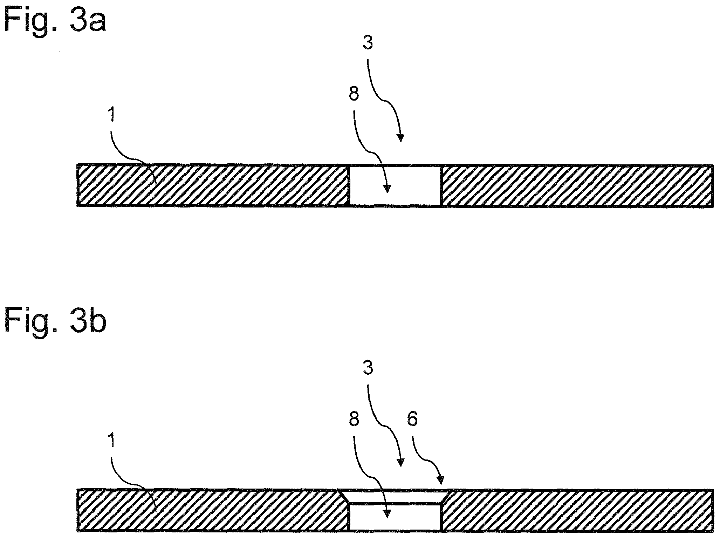

In Fig. 3a ist schematisch eine erste Ausführungsform eines ersten Bauteils 1 nach dem ersten Verfahrensschritt dargestellt. Das erste Bauteil 1 weist eine erste Fügeteilaufnahme 3 auf, die als Durchführung 8 ausgebildet ist. Die Durchführung 8 weist vorzugsweise einen kreisförmigen Querschnitt auf und ist vorzugsweise als Bohrung bzw. Stanzloch ausgebildet.

In Fig. 3b ist schematisch eine zweite Ausführungsform des ersten Bauteils 1 nach dem ersten Verfahrensschritt dargestellt. Die zweite Ausführungsform aus Fig. 3b unterscheidet sich von der ersten Ausführungsform aus Fig. 3a in dem Merkmal, dass an einem Ende der Durchführung 8 ein als Fase ausgebildeter erster Formschlussabschnitt 6 angeordnet ist.

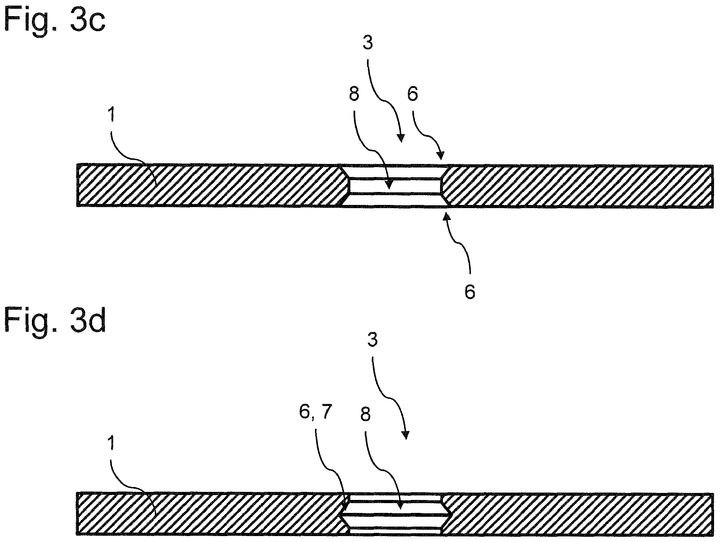

In Fig. 3c ist schematisch eine dritte Ausführungsform des ersten Bauteils 1 nach dem ersten Verfahrensschritt dargestellt. Die dritte Ausführungsform aus Fig. 3c unterscheidet sich von der zweiten Ausführungsform aus Fig. 3b in dem Merkmal, dass an beiden Enden der Durchführung 8 ein als Fase ausgebildeter erster Formschlussabschnitt 6 angeordnet ist.

In Fig. 3d ist schematisch eine vierte Ausführungsform des ersten Bauteils 1 nach dem ersten Verfahrensschritt dargestellt. Die erste Fügeteilaufnahme 3 weist eine erste Durchführung 8 auf. In einem mittleren Bereich der Durchführung 8 ist ein erster Formschlussabschnitt 6 angeordnet, der als eine aus zwei Fasen zusammengesetzte Hinterschneidung 7 ausgebildet ist.

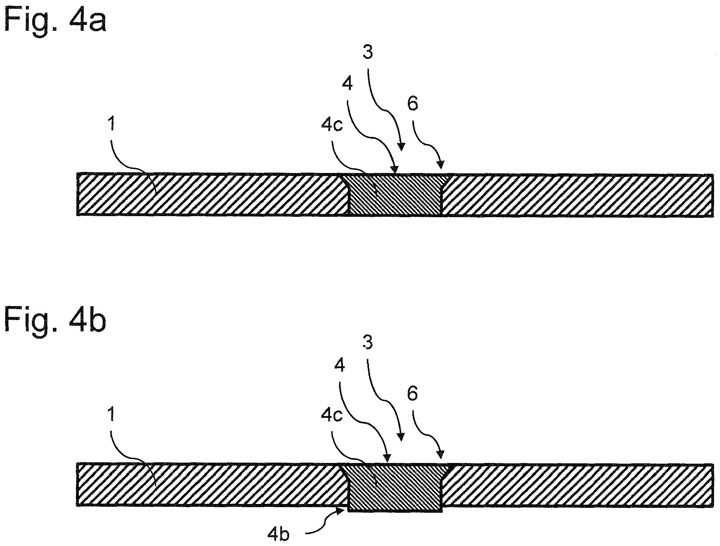

In Fig. 4a ist die zweite Ausführungsform des ersten Bauteils 1 aus Fig. 3b nach einer ersten Variante eines zweiten erfindungsgemäßen Verfahrensschritts dargestellt. In der ersten Fügeteilaufnahme 3 ist ein Grundbereich 4c eines Fügeteils 4 angeordnet, der in dem zweiten Verfahrensschritt an dieser Stelle erzeugt wurde. Das Fügeteil 4 ist formschlüssig und vorzugsweise stoffschlüssig am ersten Formschlussabschnitt 6 gegen ein Bewegen in dieser Ansicht nach unten gesichert. In einer weiteren Variante kann zusätzlich vorgesehen sein, dass das Fügeteil 4 auf einer in dieser Darstellung nach oben weisenden Seite aus dem ersten Bauteil 1 nach oben hinausragt.

In Fig. 4b ist die zweite Ausführungsform des ersten Bauteils 1 aus Fig. 3b nach einer zweiten Variante des zweiten erfindungsgemäßen Verfahrensschritts dargestellt. Das Fügeteil 4 gemäß der zweiten Variante aus Fig. 4b unterscheidet sich von dem Fügeteil 4 gemäß der ersten Variante aus Fig. 4a in dem Merkmal, dass das Fügeteil 4 einen Abstandsbereich 4b aufweist, der sich vom ersten Bauteil 1 weg in eine Richtung erstreckt, in der das zweite Bauteil 2 in der Verbindungslage angeordnet sein wird. In einer weiteren Variante kann zusätzlich vorgesehen sein, dass das Fügeteil 4 auf einer in dieser Darstellung nach oben weisenden Seite aus dem ersten Bauteil 1 nach oben hinausragt.

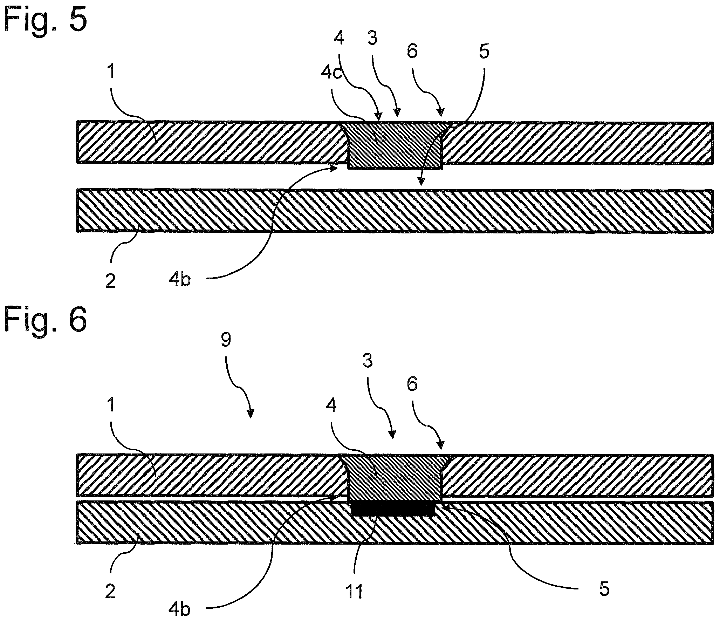

In Fig. 5 ist das erste Bauteil 1 aus Fig. 4b zusammen mit einem zweiten Bauteil 2 schematisch dargestellt. Das erste Bauteil 1 und das zweite Bauteil 2 sind noch nicht in der Verbindungslage angeordnet. Der Abstandsbereich 4b des Fügeteils 4 ist einer zweiten Fügeteilaufnahme 5 zugewandt.

In Fig. 6 ist die Konstellation aus Fig. 5 nach einem vierten Verfahrensschritt schematisch dargestellt. Das erste Bauteil 1 und das zweite Bauteil 2 sind in der Verbindungslage angeordnet. Über den Abstandsbereich 4b des Fügeteils 4 ist ein Abstand zwischen dem ersten Bauteil 1 und dem zweiten Bauteil 2 festgelegt. Der Abstandsbereich 4b ist mittels einer Schweißnaht 11 mit der zweiten Fügeteilaufnahme 5 des zweiten Bauteils 2 verbunden. Das erste Bauteil 1 ist somit über das Fügeteil 4 mit dem zweiten Bauteil 2 verbunden und bildet somit mit dem zweiten Bauteil 2 sowie dem Fügeteil 4 einen Bauteilverbund 9.

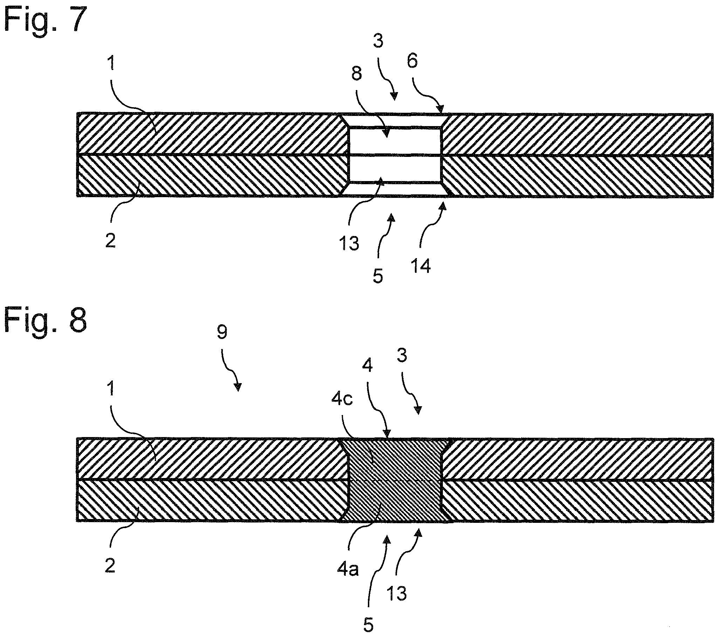

In Fig. 7 ist eine dritte Variante des erfindungsgemäßen Verfahrens vor dem Erzeugen des Fügeteils 4 dargestellt. Das erste Bauteil 1 ist gemäß der in Fig. 3b gezeigten zweiten Ausführungsform ausgebildet. Die zweite Fügeteilaufnahme 5 des zweiten Bauteils 2 ist eine Spiegelung der ersten Fügeteilaufnahme 3 des ersten Bauteils 1 und weist eine zweite Durchführung 13 sowie einen als Fase ausgebildeten zweiten Formschlussabschnitt 14 auf. Der erste Formschlussabschnitt 6 und der zweite Formschlussabschnitt 14 sind einander abgewandt. Alternativ kann erfindungsgemäß vorgesehen sein, dass die zweite Fügeteilaufnahme 5 beispielsweise einen kleineren oder größeren Durchmesser als die erste Fügeteilaufnahme 3 aufweist. Ferner kann vorgesehen sein, dass die zweite Fügeteilaufnahme 5 eine von der ersten Fügeteilaufnahme unterschiedliche Form, z.B. eine aus den Fig. 3a bis Fig. 4d bekannte Form, aufweist. Das erste Bauteil 1 und das zweite Bauteil 2 sind in der Verbindungslage dargestellt, wobei in der Verbindungslage dieses Beispiels keinen Spalt zwischen dem ersten Bauteil 1 und dem zweiten Bauteil 2 ausgebildet ist.

In Fig. 8 ist die dritte Variante aus Fig. 7 nach dem Erzeugen des Fügeteils 4 dargestellt. Ein Grundbereich 4c des Fügeteils 4 ist in der ersten Durchführung 8 der ersten Fügeteilaufnahme 4 und ein Zusatzbereich 4a des Fügeteils 4 ist in der zweiten Durchführung 13 der zweiten Fügeteilaufnahme 5 angeordnet. Das erste Bauteil 1 ist somit über das Fügeteil 4 mit dem zweiten Bauteil 2 verbunden und bildet somit mit dem zweiten Bauteil 2 sowie dem Fügeteil 4 einen Bauteilverbund 9.

### Bezugszeichenliste

- 1: erstes Bauteil
- 2: zweites Bauteil
- 3: erste Fügeteilaufnahme
- 4: Fügeteil
- 4a: Zusatzbereich
- 4b: Abstandsbereich
- 4c: Grundbereich
- 5: zweite Fügeteilaufnahme
- 6: erster Formschlussabschnitt
- 7: erste Hinterschneidung
- 8: erste Durchführung
- 9: Bauteilverbund
- 10: Bolzen
- 11: Schweißnaht
- 12: Butzen
- 12a: Mittelteil
- 12b: Seitenteil
- 13: zweite Durchführung
- 14: zweiter Formschlussabschnitt
- 15: Bolzenkopf

## Patentansprüche

1. Verfahren zum Verbinden eines ersten Bauteils (1) mit einem zweiten Bauteil (2), aufweisend die Schritte:
- Bereitstellen eines ersten Bauteils (1) mit einer ersten Fügeteilaufnahme (3);
- Erzeugen eines Fügeteils (4) an und/oder in der ersten Fügeteilaufnahme (3) mittels eines generativen Verfahrens;
- Bereitstellen eines zweiten Bauteils (2) mit einer zweiten Fügeteilaufnahme (5); und
- Verbinden des Fügeteils (4) mit der zweiten Fügeteilaufnahme (5) des zweiten Bauteils (2), wobei das Verbinden des Fügeteils (4) mit der zweiten Fügeteilaufnahme (5) durch Erzeugen eines Zusatzbereichs (4a) des Fügeteils (4) in der zweiten Fügeteilaufnahme (5) mittels des generativen Verfahrens erfolgt.

2. Verfahren nach Anspruch 1,
**dadurch gekennzeichnet, dass**
das Fügeteil (4) beim Verbinden mit der zweiten Fügeteilaufnahme (5) mit der zweiten Fügeteilaufnahme (5) verschweißt und/oder verlötet und/oder verklebt wird.

3. Verfahren nach Anspruch 1 oder 2,
**dadurch gekennzeichnet, dass**
das Fügeteil (4) mit der ersten Fügeteilaufnahme (3) verschweißt und/oder verlötet und/oder verklebt wird.

4. Verfahren nach wenigstens einem der vorangegangenen Ansprüche,
**dadurch gekennzeichnet, dass**
das Fügeteil (4) aus einem Fügeteilwerkstoff erzeugt wird, der mindestens einen ersten Werkstoff und einen vom ersten Werkstoff verschiedenen zweiten Werkstoff aufweist, wobei der erste Werkstoff stoffschlüssig mit dem ersten Bauteil (1) und der zweite Werkstoff stoffschlüssig mit dem zweiten Bauteil (2) verbunden wird.

5. Verfahren nach wenigstens einem der vorangegangenen Ansprüche,
**dadurch gekennzeichnet, dass**
das Fügeteil (4) mittels eines 3D-Druckverfahrens, Lasersinterverfahrens, Metallspritzverfahrens, selektiven Laserschmelzverfahrens, Lötverfahrens oder Thixoformingverfahrens erzeugt wird.

6. Verfahren nach wenigstens einem der vorangegangenen Ansprüche,
**dadurch gekennzeichnet, dass**
während des Erzeugens des Fügeteils (4) eine stoffschlüssige oder kraftschlüssige Verbindung des Fügeteils (4) mit dem ersten Bauteil (1) und/oder zweiten Bauteil (2) ausgebildet wird.

7. Verfahren nach wenigstens einem der vorangegangenen Ansprüche,
**dadurch gekennzeichnet, dass**
die erste Fügeteilaufnahme (3) einen ersten Formschlussabschnitt (6) aufweist, wobei das Fügeteil (4) in der ersten Fügeteilaufnahme (3) derart erzeugt wird, dass das Fügeteil (4) über den ersten Formschlussabschnitt (6) formschlüssig an der ersten Fügeteilaufnahme (3) gehalten ist.

8. Verfahren nach Anspruch 7,
**dadurch gekennzeichnet, dass**
der erste Formschlussabschnitt (6) eine erste Hinterschneidung (7) aufweist, wobei das Fügeteil (4) derart erzeugt wird, dass das Fügeteil an der ersten Hinterschneidung (7) formschlüssig gehalten wird.

9. Verfahren nach wenigstens einem der vorangegangenen Ansprüche,
**dadurch gekennzeichnet, dass**
die erste Fügeteilaufnahme (3) eine erste Durchführung (8) aufweist.

10. Verfahren nach Anspruch 7,
**dadurch gekennzeichnet, dass**
die erste Durchführung (8) beim Erzeugen des Fügeteils (4) von dem Fügeteil (4) komplett oder zumindest teilweise verschlossen wird.

11. Verfahren nach wenigstens einem der vorangegangenen Ansprüche,
**dadurch gekennzeichnet, dass**
das erste Bauteil (1) einen ersten Bauteilwerkstoff und das zweite Bauteil (2) einen zweiten Bauteilwerkstoff aufweisen, wobei der erste Bauteilwerkstoff und der zweite Bauteilwerkstoff verschiedene Werkstoffe sind.

12. Verfahren nach wenigstens einem der vorangegangenen Ansprüche,
**dadurch gekennzeichnet, dass**
beim Bereitstellen eines zweiten Bauteils (2) die zweite Fügeteilaufnahme (5) an dem Fügeteil (4) derart angeordnet wird, dass das Fügeteil (4) in die zweite Fügeteilaufnahme (5) hineinragt.

13. Verfahren nach wenigstens einem der vorangegangenen Ansprüche,
**dadurch gekennzeichnet, dass**
beim Erzeugen des Fügeteils (4) ein Teilbereich des Fügeteils als Abstandsbereich (4b) erzeugt wird, der zum Ausbilden eines definierten Abstands zwischen dem ersten Bauteil (1) und dem zweiten Bauteil (2) ausgebildet ist.

14. Bauteilverbund (9) aufweisend mindestens ein erstes Bauteil (1) und mindestens ein zweites Bauteil (2), wobei das erste Bauteil (1) mittels eines Fügeteils (4) mit dem zweiten Bauteil (2) verbunden ist,
**dadurch gekennzeichnet, dass**
das erste Bauteil (1) und das zweite Bauteil (2) mittels eines Verfahrens nach wenigstens einem der Ansprüche 1 bis 13 miteinander verbunden sind.

## Claims

1. Method for connecting a first component (1) to a second component (2), having the steps:
- providing a first component (1) which has a first joining-part receptacle (3);
- creating a joining part (4) on and/or in the first joining-part receptacle (3) by means of a generative method;
- providing a second component (2) which has a second joining-part receptacle (5); and
- connecting the joining part (4) to the second joining-part receptacle (5) of the second component (2), wherein the joining part (4) is connected to the second joining-part receptacle (5) by creating an additional region (4a) of the joining part (4) in the second joining-part receptacle (5) by means of the generative method.

2. Method according to Claim 1,
**characterized in that**
the joining part (4) is welded and/or soldered and/or adhesively bonded to the second joining-part receptacle (5) when said joining part is being connected to the second joining-part receptacle (5).

3. Method according to Claim 1 or 2,
**characterized in that**
the joining part (4) is welded and/or soldered and/or adhesively bonded to the first joining-part receptacle (3) .

4. Method according to at least one of the preceding claims,
**characterized in that**
the joining part (4) is created from a joining-part material which comprises at least a first material and a second material that differs from the first material, wherein the first material is materially bonded to the first component (1) and the second material is materially bonded to the second component (2).

5. Method according to at least one of the preceding claims,
**characterized in that**
the joining part (4) is created by means of a 3D printing method, laser sintering method, metal spraying method, selective laser melting method, soldering method or thixoforming method.

6. Method according to at least one of the preceding claims,
**characterized in that**,
during the creation of the joining part (4), a material bond or force-fitting connection of the joining part (4) to the first component (1) and/or second component (2) is formed.

7. Method according to at least one of the preceding claims,
**characterized in that**
the first joining-part receptacle (3) has a first form-fitting portion (6), wherein the joining part (4) is created in the first joining-part receptacle (3) in such a way that the joining part (4) is retained on the first joining-part receptacle (3) in a form-fitting manner by way of the first form-fitting portion (6).

8. Method according to Claim 7,
**characterized in that**
the first form-fitting portion (6) has a first undercut (7), wherein the joining part (4) is created in such a way that the joining part is retained on the first undercut (7) in a form-fitting manner.

9. Method according to at least one of the preceding claims,
**characterized in that**
the first joining-part receptacle (3) has a first leadthrough (8).

10. Method according to Claim 7,
**characterized in that**
the first leadthrough (8) is completely or at least partially closed by the joining part (4) when the joining part (4) is being created.

11. Method according to at least one of the preceding claims,
**characterized in that**
the first component (1) comprises a first component material and the second component (2) comprises a second component material, wherein the first component material and the second component material are different materials.

12. Method according to at least one of the preceding claims,
**characterized in that**,
when a second component (2) is being provided, the second joining-part receptacle (5) is arranged on the joining part (4) in such a way that the joining part (4) protrudes into the second joining-part receptacle (5).

13. Method according to at least one of the preceding claims,
**characterized in that**,
when the joining part (4) is being created, a partial region of the joining part is created as a spacer region (4b), which is designed to form a defined spacing between the first component (1) and the second component (2).

14. Component composite (9) having at least one first component (1) and at least one second component (2), wherein the first component (1) is connected to the second component (2) by means of a joining part (4),
**characterized in that**
the first component (1) and the second component (2) are connected to one another by means of a method according to at least one of Claims 1 to 13.

## Revendications

1. Procédé de liaison d'un premier composant (1) à un deuxième composant (2), comprenant les étapes suivantes :
- la fourniture d'un premier composant (1) muni d'un premier logement de pièce d'assemblage (3) ;
- la production d'une pièce d'assemblage (4) sur et/ou dans le premier logement de pièce d'assemblage (3) au moyen d'un procédé génératif ;
- la fourniture d'un deuxième composant (2) muni d'un deuxième logement de pièce d'assemblage (5) ; et
- la liaison de la pièce d'assemblage (4) avec le deuxième logement de pièce d'assemblage (5) du deuxième composant (2), la liaison de la pièce d'assemblage (4) avec le deuxième logement de pièce d'assemblage (5) ayant lieu par production d'une zone supplémentaire (4a) de la pièce d'assemblage (4) dans le deuxième logement de pièce d'assemblage (5) au moyen du procédé génératif.

2. Procédé selon la revendication 1,
**caractérisé en ce que**
la pièce d'assemblage (4) est soudée et/ou brasée et/ou collée avec le deuxième logement de pièce d'assemblage (5) lors de liaison avec le deuxième logement de pièce d'assemblage (5).

3. Procédé selon la revendication 1 ou 2,
**caractérisé en ce que**
la pièce d'assemblage (4) est soudée et/ou brasée et/ou collée avec le premier logement de pièce d'assemblage (3) .

4. Procédé selon au moins l'une quelconque des revendications précédentes,
**caractérisé en ce que**
la pièce d'assemblage (4) est produite en un matériau de pièce d'assemblage qui comprend au moins un premier matériau et un deuxième matériau différent du premier matériau, le premier matériau étant relié par accouplement de matière avec le premier composant (1) et le deuxième matériau étant relié par accouplement de matière avec le deuxième composant (2).

5. Procédé selon au moins l'une quelconque des revendications précédentes,
**caractérisé en ce que**
la pièce d'assemblage (4) est produite au moyen d'un procédé d'impression 3D, d'un procédé de frittage laser, d'un procédé de projection métallique, d'un procédé de fusion laser sélective, d'un procédé de brasage ou d'un procédé de thixoformage.

6. Procédé selon au moins l'une quelconque des revendications précédentes,
**caractérisé en ce que**
pendant la production de la pièce d'assemblage (4), une liaison par accouplement de matière ou par accouplement de force de la pièce d'assemblage (4) avec le premier composant (1) et/ou le deuxième composant (2) est formée.

7. Procédé selon au moins l'une quelconque des revendications précédentes,
**caractérisé en ce que**
le premier logement de pièce d'assemblage (3) comprend une première section d'accouplement de forme (6), la pièce d'assemblage (4) étant produite dans le premier logement de pièce d'assemblage (3) de telle sorte que la pièce d'assemblage (4) est maintenue par accouplement de forme sur le premier logement de pièce d'assemblage (3) par l'intermédiaire de la première section d'accouplement de forme (6).

8. Procédé selon la revendication 7,
**caractérisé en ce que**
la première section d'accouplement de forme (6) comprend une première contre-dépouille (7), la pièce d'assemblage (4) étant produite de telle sorte que la pièce d'assemblage est maintenue par accouplement de forme sur la première contre-dépouille (7).

9. Procédé selon au moins l'une quelconque des revendications précédentes,
**caractérisé en ce que**
le premier logement de pièce d'assemblage (3) comprend un premier passage (8).

10. Procédé selon la revendication 7,
**caractérisé en ce que**
le premier passage (8) est complètement ou au moins partiellement fermé par la pièce d'assemblage (4) lors de la production de la pièce d'assemblage (4).

11. Procédé selon au moins l'une quelconque des revendications précédentes,
**caractérisé en ce que**
le premier composant (1) comprend un premier matériau de composant et le deuxième composant (2) comprend un deuxième matériau de composant, le premier matériau de composant et le deuxième matériau de composant étant des matériaux différents.

12. Procédé selon au moins l'une quelconque des revendications précédentes,
**caractérisé en ce que**
lors de la fourniture d'un deuxième composant (2), le deuxième logement de pièce d'assemblage (5) est agencé sur la pièce d'assemblage (4) de telle sorte que la pièce d'assemblage (4) dépasse dans le deuxième logement de pièce d'assemblage (5).

13. Procédé selon au moins l'une quelconque des revendications précédentes,
**caractérisé en ce que**
lors de la production de la pièce d'assemblage (4), une zone partielle de la pièce d'assemblage est produite en tant que zone d'espacement (4b), qui est configurée pour la formation d'un espacement défini entre le premier composant (1) et le deuxième composant (2).

14. Composite de composants (9) comprenant au moins un premier composant (1) et au moins un deuxième composant (2), le premier composant (1) étant relié au deuxième composant (2) au moyen d'une pièce d'assemblage (4),
**caractérisé en ce que**
le premier composant (1) et le deuxième composant (2) sont reliés l'un à l'autre au moyen d'un procédé selon au moins l'une quelconque des revendications 1 à 13.
